# FASCICULE DE BREVET EUROPEEN

(11) **EP 1 796 887 B1**
(45) Date de publication et mention de la délivrance du brevet: **20.06.2012**
(21) Numéro de dépôt: 05798291.0
(22) Date de dépôt: 16.08.2005
(51) Int. Cl.: B29B 17/00, C08J 11/06, C08L 23/12, B29C 70/02

(54) **PIÈCE EN MATIÈRE PLASTIQUE POUR VEHICULE AUTOMOBILE COMPORTANT DU POLYPROPYLÈNE CHARGE EN FIBRES DE VERRE NEUVES ET RECYCLEES**
KUNSTSTOFFTEIL FÜR KRAFTFAHRZEUG MIT AUS NEUEN UND RECYCELTEN GLASFASERN VERSTÄRKTEM POLYPROPYLEN
PLASTIC PART FOR MOTOR VEHICLE COMPRISING POLYPROPYLENE REINFORCED WITH NEW AND RECYCLED GLASS FIBERS

(30) Priorité: 20.08.2004 FR 0409026
(43) Date de publication de la demande: 20.06.2007
(73) Titulaire: COMPAGNIE PLASTIC OMNIUM, 69007 Lyon (FR)
(72) Inventeur: VIOT, Frédéric, F-01450 Poncin (FR); CHENE, Anthony, F-01640 Jujurieux (FR)
(74) Mandataire: Remy, Vincent Noel Paul
(86) Numéro de dépôt international: PCT/FR2005/002090
(87) Numéro de publication internationale: WO 2006/021690

(56) Documents cités:
- EP-A- 0 945 253
- EP-A- 1 008 528
- EP-A- 1 479 502
- US-A1- 2003 087 973
- US-A1- 2003 143 366
- US-B1- 6 322 893

## Description

La présente invention concerne un procédé de fabrication d'une pièce en matière plastique et une pièce en matière plastique pour véhicule automobile comportant du polypropylène chargé en fibres de verre.

On connaît déjà le polypropylène, intervenant souvent dans la composition de produits structurels de véhicules automobiles. Il est courant d'ajouter à ce polypropylène une certaine quantité de fibres de verre dans le but d'améliorer les propriétés mécaniques du produit, et en particulier dans le but d'en augmenter la solidité et la rigidité.

On sait également que le secteur industriel est et sera à l'avenir de plus en plus amené à répondre à des exigences réglementaires et écologiques, nécessitant un recours croissant à des matériaux recyclés.

A cet effet, les industries, notamment automobiles, sont tenues de recycler les fibres de verre qu'elles utilisent, générant ainsi de grandes quantités de fibres de verre recyclées.

Ainsi, il serait, d'un point de vue économique et écologique, particulièrement intéressant de trouver un débouché ou une utilisation pertinente à ces fibres de verre recyclées.

Cependant, les applications de ces fibres de verre recyclées sont relativement limitées car ces dernières ne peuvent pas être simplement substituées aux fibres de verre neuves. En effet, elles ne possèdent pas des propriétés mécaniques équivalentes. Cela est dû au fait que les fibres de verres recyclées sont beaucoup plus courtes que les fibres de verres neuves, alors qu'une part importante de leurs propriétés mécaniques est justement liée à leur longueur : plus elles sont longues, plus le matériau auquel on les aura ajoutées sera performant.

Par conséquent, on utilise majoritairement, parmi les pièces structurelles de véhicule automobile comportant du polypropylène chargé en fibre de verre, des mélanges de polypropylène brut, c'est-à-dire sans fibre de verre, et de polypropylène chargé en fibres de verre neuves.

Les documents US 2003/0087973, US 2003/0143366, EP 1479502, EP 09945253, US 6322893, EP 1008528, mentionnent l'utilisation de polypropylène et/ou de fibres de verre neuves, et de polypropylène et/ou de fibres de verre recyclées.

La présente invention vise à répondre aux préoccupations réglementaires, économiques et écologiques précitées en proposant une pièce en matière plastique pour véhicule automobile comportant des fibres de verre recyclées sans pour autant diminuer de manière significative ses propriétés mécaniques.

A cet effet, l'invention concerne un procédé de fabrication d'une pièce en matière plastique pour véhicule automobile au cours duquel on mélange du polypropylène chargé en fibres de verre neuves avec entre 15 et 25% de polypropylène chargé en fibres de verre recyclées, et une pièce en matière plastic selon la revendication indépendante 10. Des formes avantageuses de l'invention font l'objet des revendications dépendantes.

Les inventeurs à l'origine de l'invention se sont rendu compte que, de manière surprenante, une pièce en matière plastique dans laquelle cette proportion de polypropylène chargé en fibres de verre neuves a été remplacée par du polypropylène chargé en fibres de verre recyclées, est telle que les propriétés mécaniques de cette pièce sont sensiblement inchangées par rapport à celles d'une pièce de composition classique.

En outre, les inventeurs ont également remarqué que la fabrication d'une pièce selon l'invention est particulièrement facilitée du point de vue dimensionnel. En effet, on sait que les pièces de véhicule peuvent être de grande dimension, et ont tendance à vriller facilement, en raison du retrait de la matière plastique lors de son refroidissement. Il apparaît que l'utilisation de fibres de verre recyclées diminue cette tendance à vriller, du fait que le retrait de la matière plastique est moindre, si bien que les dimensions de la pièce sont plus faciles à respecter.

Eventuellement, les fibres de verre recyclées de l'invention sont sous forme micronisée, c'est-à-dire broyée à l'état d'une fine poudre blanche.

Cette caractéristique est particulièrement intéressante, car il est difficile, du point de vue du procédé industriel, de manipuler la fibre de verre recyclée. En effet, la fibre de verre recyclée est difficilement assimilable car elle est d'une texture cotonneuse et volatile, et nécessite donc des conditions opératoires et des mesures de sécurité pour préserver la santé des opérateurs beaucoup plus compliquées que pour la fibre de verre neuve. Les fibres de verre recyclées à l'état micronisé sont d'un maniement plus aisé.

Cette mise en oeuvre est toutefois particulièrement surprenante puisque l'homme du métier a jusqu'ici toujours recherché à utiliser des fibres les plus longues possible. Paradoxalement, le fait de recourir à des fibres de verre micronisées, c'est-à-dire encore plus courtes que des fibres de verre recyclées classiques, et a fortiori que des fibres de verre neuves, fournit des résultats satisfaisants, puisqu'elle permet le maintien des propriétés mécaniques recherchées de la pièce.

Une hypothèse pour expliquer ce paradoxe pourrait être que toutes les fibres ne jouent pas le même rôle au sein du matériaux : certaines (par exemple entre 15 et 25% d'entres elles) pourraient n'avoir qu'une influence locale et leur remplacement par des fibres de verre plus courtes n'altérerait donc en rien la rigidité et la résistance de l'ensemble du matériau.

L'utilisation de fibres de verre recyclées sous forme micronisée amplifie l'avantage dimensionnel décrit ci-dessus. En effet, le retrait de la matière plastique est encore plus faible.

Une pièce en matière plastique selon l'invention peut en outre comporter l'une ou plusieurs des caractéristiques suivantes :
- la teneur des fibres de verre recyclées dans le polypropylène chargé en fibres de verre est de 25 à 40% ;
- le polypropylène chargé en fibres de verre recyclées est du polypropylène recyclé ;
- la pièce selon l'invention comporte entre 20 et 50% de polypropylène chargé en fibres de verre non recyclées ;
- le polypropylène chargé en fibres de verre non recyclées comprend entre 20 et 70% de fibres de verre non recyclées ;
- la pièce selon l'invention comporte en outre du polypropylène recyclé brut, c'est-à-dire sans fibre de verre ;
- la pièce selon l'invention comporte entre 20 et 50% de polypropylène recyclé brut ; et
- la pièce selon l'invention est une pièce structurelle de véhicule automobile.

A titre d'exemple non limitatif de l'invention, on peut ainsi fabriquer une pièce structurelle de véhicule automobile, par exemple une poutre de pare-chocs, un longeron ou une face avant technique, avec un mélange comportant :
- environ 20% de polypropylène recyclé chargé à hauteur d'environ 30% en fibres de verre micronisées recyclées,
- environ 40% de polypropylène neuf chargé à hauteur d'environ 60% en fibres de verre neuves, et
- environ 40% de polypropylène recyclé brut.

On peut par exemple recourir aux fibres de verre recyclées commercialisée sous forme micronisée par la société M.C.R. dont la référence produit est P4300-02.

Le mélange précité sert par exemple à la fabrication de pièces qui étaient constituées, dans l'état de la technique, de :
- polypropylène neuf ou recyclé chargé à hauteur d'environ 30% en fibres de verre neuves ; ou
- d'un mélange en proportion sensiblement égale de polypropylène brut et de polypropylène chargé à hauteur d'environ 60% en fibres de verre neuves, le polypropylène brut pouvant être, de manière avantageuse, recyclé.

Cette substitution présente l'avantage de mettre ces produits davantage en conformité avec la réglementation, car elle augmente la teneur globale des véhicules automobiles en produits recyclés. Pour cette même raison, elle est économiquement plus intéressante, le coût de revient des produits recyclés étant inférieur à celui des produits neufs.

Elle constitue de plus une utilisation intéressante des fibres de verre recyclées, que l'industrie génère en quantité mais dont les applications sont peu nombreuses du fait de ses moins bonnes propriétés et des difficultés qu'engendrent sa manipulation.

Enfin, elle présente un intérêt écologique évident.

On notera que la présente invention ne se limite pas au mode de réalisation précédemment décrit.

## Revendications

1. Procédé de fabrication d'une pièce en matière plastique pour véhicule automobile **caractérisé en ce que** l'on mélange du polypropylène chargé en fibres de verre neuves avec entre 15 et 25% de polypropylène chargé en fibres de verre recyclées.

2. Procédé selon la revendication 1, dans lequel la teneur des fibres de verre recyclées dans le polypropylène chargé en fibres de verre est de 25 à 40%.

3. Procédé selon l'une des revendications 1 ou 2, dans lequel les fibres de verre recyclées sont sous forme micronisée.

4. Procédé selon l'une quelconque des revendications 1 à 3, dans lequel le polypropylène chargé en fibres de verre recyclées est du polypropylène recyclé.

5. Procédé selon l'une des revendications 1 à 4, dans lequel la pièce comporte entre 20 et 50% de polypropylène chargé en fibres de verre non recyclées.

6. Procédé selon l'une des revendications 1 à 5, dans lequel le polypropylène chargé en fibres de verre neuves comprend entre 20 et 70% de fibres de verre neuves.

7. Procédé selon l'une des revendications 1 à 6, dans lequel la pièce comporte en outre du polypropylène recyclé brut, c'est-à-dire sans fibre de verre.

8. Procédé selon la revendication 7, dans lequel la pièce comporte entre 20 et 50% de polypropylène recyclé brut.

9. Procédé selon l'une quelconque des revendications précédentes, pour la fabrication d'une pièce structurelle de véhicule automobile, telle qu'une poutre de pare-chocs, un longeron ou une face avant technique.

10. Pièce en matière plastique pour véhicule automobile comportant du polypropylène chargé en fibres de verre neuves, **caractérisée en ce qu'**elle comprend en outre entre 15 et 25% de polypropylène chargé en fibres de verre recyclées, dont la teneur en fibres de verre recyclées dans le polypropylène chargé en fibres de verre recyclées est de 25 à 40%, de sorte que la pièce comprend de 3,75 à 10% de fibres de verre recyclées, les fibres de verre recyclées étant plus courtes que les fibres de verre neuves.

11. Pièce selon la revendication précédente, comportant entre 20 et 50% de polypropylène chargé en fibres de verre non recyclées, ce polypropylène comprenant entre 20 et 70% de fibres de verre neuves, de sorte que la pièce comporte de 3,75 à 10% de fibres de verre recyclées et en outre de 4 à 35% de fibres de verre neuves.

12. Pièce selon les revendications 10 ou 11, dans laquelle les fibres de verre recyclées sont sous forme micronisée.

## Claims

1. A method for fabricating a plastics material part for a motor vehicle, **characterized in that** polypropylene filled with new glass fibers is mixed with 15% to 25% polypropylene filled with recycled glass fibers.

2. A method according to claim 1, in which the recycled glass fiber content in the polypropylene filled with glass fibers lies in the range 25% to 40%.

3. A method according to claim 1 or claim 2, in which the recycled glass fibers are in micronized form.

4. A method according to any one of claims 1 to 3, in which the polypropylene filled with recycled glass fibers is recycled polypropylene.

5. A method according to any one of claims 1 to 4, wherein the part includes 20% to 50% polypropylene filled with non-recycled glass fibers.

6. A method according to any one of claims 1 to 5, in which the polypropylene filled with new glass fibers comprises 20% to 70% new glass fibers.

7. A method according to any one of claims 1 to 6, wherein the part further includes recycled polypropylene that is raw, i.e. without any glass fibers.

8. A method according to claim 7, wherein the part includes 20% to 50% raw recycled polypropylene.

9. A method according to any one of previous claims, for fabricating a structural member for a motor vehicle, like a bumper beam, a side rail or a front end carrier.

10. A plastics material part for a motor vehicle, comprising polypropylene filled with new glass fibers, **characterized in that** it further includes 15% to 25% polypropylene filled with recycled glass fibers, wherein the recycled glass fiber content in the polypropylene filled with glass fibers lies in the range 25% to 40%, so that the part comprises 3.75% to 10% recycled glass fibers, recycled glass fibers being shorter than new glass fibers.

11. A part according to the previous claim, including, 20% to 50% polypropylene filled with non-recycled glass fibers, this polypropylene comprising 20% to 70% new glass fibers, so that the part comprises 3.75% to 10% recycled glass fibers and 4% to 35% new glass fibers.

12. A part according to claims 10 or 12, wherein which the recycled glass fibers are in micronized form.

## Patentansprüche

1. Verfahren zur Herstellung eines Kunststoffteils für Kraftfahrzeuge, **dadurch gekennzeichnet, dass** Polypropylen, das mit neuen Glasfasern verstärkt ist, mit 15 bis 25 % an Polypropylen, das mit zurückgewonnenen Glasfasern verstärkt ist, vermischt wird.

2. Verfahren nach Anspruch 1, wobei der Gehalt an zurückgewonnenen Glasfasern im glasfaserverstärkten Polypropylen 25 bis 40 % beträgt.

3. Verfahren nach einem der Ansprüche 1 oder 2, wobei die zurückgewonnenen Glasfasern in mikronisierter Form vorliegen.

4. Verfahren nach einem beliebigen der Ansprüche 1 bis 3, wobei es sich bei dem Polypropylen, das mit zurückgewonnenen Glasfasern verstärkt ist, um zurückgewonnenes Polypropylen handelt.

5. Verfahren nach einem der Ansprüche 1 bis 4, wobei das Teil 20 bis 50 % an Polypropylen, das mit nicht-zurückgewonnenen Glasfasern verstärkt ist, aufweist.

6. Verfahren nach einem der Ansprüche 1 bis 5, wobei das Polypropylen, das mit neuen Glasfasern verstärkt ist, 20 bis 70 % an neuen Glasfasern aufweist.

7. Verfahren nach einem der Ansprüche 1 bis 6, wobei das Teil darüber hinaus zurückgewonnenes Polypropylen aufweist, welches unverarbeitet, das heißt, ohne Glasfasern ist.

8. Verfahren nach Anspruch 7, wobei das Teil 20 bis 50 % an zurückgewonnenem Polypropylen enthält, welches unverarbeitet ist.

9. Verfahren nach einem beliebigen der vorhergehenden Ansprüche, zur Herstellung eines Kraftfahrzeugbauteils wie etwa eines Stoßfängerträgers, eines Holms oder eines technischen Frontteils.

10. Kunststoffteil für Kraftfahrzeuge, das Polypropylen aufweist, welches mit neuen Glasfasern verstärkt ist, **dadurch gekennzeichnet, dass** es darüber hinaus 15 bis 25 % an Polypropylen umfasst, welches mit zurückgewonnenen Glasfasern verstärkt ist, wobei der Gehalt an zurückgewonnenen Glasfasern im glasfaserverstärkten Polypropylen 25 bis 40 % beträgt, sodass das Teil 3,75 bis 10 % an zurückgewonnenen Glasfasern aufweisst, wobei die zurückgewonnenen Glasfasern kürzer als die neuen Glasfasern sind.

11. Teil nach dem vorhergehenden Anspruch, das 20 bis 50 % an Polypropylen aufweist, welches mit nicht-zurückgewonnenen Glasfasern verstärkt ist, wobei dieses Polypropylen 20 bis 70 % an neuen Glasfasern aufweist, sodass das Teil 3,75 bis 10 % an zurückgewonnenen Glasfasern und weiterhin 4 bis 35 % an neuen Glasfasern aufweist.

12. Teil nach den Ansprüchen 10 oder 11, wobei die zurückgewonnenen Glasfasern in mikronisierter Form vorliegen.
